# EUROPEAN PATENT APPLICATION

(11) **EP 4 224 297 A1**
(43) Date of publication of application: **09.08.2023**
(21) Application number: 22192718.9
(22) Date of filing: 30.08.2022
(51) Int. Cl.: G06F 3/04817, G06F 3/0481, G06F 3/0483, G06F 40/103

(54) **INFORMATION PROCESSING SYSTEM AND PROGRAM**

(30) Priority: 08.02.2022 JP 2022018247
(71) Applicant: FUJIFILM Business Innovation Corp., Minato-ku Tokyo (JP)
(72) Inventor: FUJII, Toshihide, Yokohama-shi (JP)
(74) Representative: Haseltine Lake Kempner LLP

(57) **Abstract**

An information processing system includes a processor configured to: acquire file information serving as information about a file specified by a user; cause a display to display an enlarged image corresponding to a file image in a case where the file image displayed on the display and serving as an image corresponding to the file is selected by the user, the enlarged image serving as an image with a display size larger than a display size of the file image; and cause the display to display a corresponding image corresponding to the file information when the enlarged image is displayed on the display.

## Description

### Background

### (i) Technical Field

The present disclosure relates to information processing systems and programs.

### (ii) Related Art

In Japanese Unexamined Patent Application Publication No. 2008-77210, an operation performed by a user on a screen that displays an image based on document data and a thumbnail image of the document data is recognized as operation information, a display condition when the image is to be displayed on the screen is set based on the recognized operation information on the thumbnail image, and the image is enlarged and displayed in accordance with the set display condition.

### Summary

When files are to be compared with each other, it is conceivable that the user selects files displayed on the display and compares the selected files with each other. In this case, for files that are not displayed on the display during the comparison, it is difficult to compare such files with each other.

Accordingly, it is an object of the present disclosure to compare a file preliminarily specified by a user with a file displayed on a display.

According to a first aspect of the present disclosure, there is provided an information processing system including a processor configured to: acquire file information serving as information about a file specified by a user; cause a display to display an enlarged image corresponding to a file image in a case where the file image displayed on the display and serving as an image corresponding to the file is selected by the user, the enlarged image serving as an image with a display size larger than a display size of the file image; and cause the display to display a corresponding image corresponding to the file information when the enlarged image is displayed on the display.

According to a second aspect of the disclosure, in the information processing system according to the first aspect, the processor is configured to cause the display to display a candidate screen that receives an operation performed by the user for specifying the file from a file candidate displayed as the corresponding image, and acquire the file information serving as the information about the file specified by the user in a case where the operation performed by the user for specifying the file is received on the candidate screen.

According to a third aspect of the disclosure, in the information processing system according to the first or second aspect, the processor is configured to cause the display to display the corresponding image with a display size larger than the display size of the file image.

According to a fourth aspect of the disclosure, in the information processing system according to any one of the first to third aspects, the processor is configured to cause the display to display the enlarged image and the corresponding image without overlapping each other.

According to a fifth aspect of the disclosure, in the information processing system according to the fourth aspect, the processor is configured to set a display position of the enlarged image based on a display position of the selected file image, and set a display position of the corresponding image based on the display position of the enlarged image.

According to a sixth aspect of the disclosure, in the information processing system according to the fifth aspect, the processor is configured to set the display position of the corresponding image based on a size of a margin existing around the enlarged image.

According to a seventh aspect of the disclosure, in the information processing system according to any one of the first to fourth aspects, the processor is configured to, when the enlarged image is to be displayed on the display, vary a display position of the enlarged image between a case where the file information is acquired and a case where the file information is not acquired.

According to an eighth aspect of the disclosure, in the information processing system according to the seventh aspect, the processor is configured to set the display position of the enlarged image toward an edge of the display in the case where the file information is acquired, and set the display position of the enlarged image toward a middle of the display in the case where the file information is not acquired.

According to a ninth aspect of the disclosure, in the information processing system according to any one of the first to eighth aspects, the processor is configured to cause the display to display multiple corresponding images when the enlarged image is to be displayed on the display in a case where multiple pieces of the file information are acquired, the multiple corresponding images respectively corresponding to the multiple pieces of file information.

According to a tenth aspect of the disclosure, in the information processing system according to the ninth aspect, the processor is configured to cause the display to display all of the multiple corresponding images.

According to an eleventh aspect of the disclosure, in the information processing system according to the ninth aspect, the processor is configured to switch the corresponding image to be displayed on the display in the case where the multiple corresponding images exist.

According to a twelfth aspect of the disclosure, in the information processing system according to the eleventh aspect, the processor is configured to not include the enlarged image as a switching target of the display and maintain the enlarged image in a displayed state.

According to a thirteenth aspect of the disclosure, in the information processing system according to any one of the first to third aspects, the processor is configured to set the enlarged image to a non-displayed state and cause the display to display multiple corresponding images if the user specifies multiple files and acquires multiple pieces of the file information and if a predetermined condition is satisfied.

According to a fourteenth aspect of the disclosure, in the information processing system according to any one of the first to thirteenth aspects, the processor is configured to acquire, as the file information, information about a file selected by the user from a file extracted as a result of a searching process.

According to a fifteenth aspect of the disclosure, there is provided a program causing a computer to execute a process. The process includes: acquiring file information serving as information about a file specified by a user; causing a display to display an enlarged image corresponding to a file image in a case where the file image displayed on the display and serving as an image corresponding to the file is selected by the user, the enlarged image serving as an image with a display size larger than a display size of the file image; and causing the display to display a corresponding image corresponding to the file information when the enlarged image is displayed on the display.

According to the first and fifteen aspects of the disclosure, the file preliminarily specified by the user and the file displayed on the display may be compared with each other.

According to the second aspect of the disclosure, the user may preliminarily specify the file from the file candidate displayed on the candidate screen.

According to the third aspect of the disclosure, the visibility of the contents of the file corresponding to the corresponding image may be improved, as compared with a case where the display displays the corresponding image with a display size smaller than that of the file image.

According to the fourth aspect of the disclosure, the user may readily compare the enlarged image and the corresponding image with each other, as compared with a case where the display displays the enlarged image and the corresponding image in an overlapping manner.

According to the fifth aspect of the disclosure, the corresponding image may be displayed larger than in a case where the display position of the corresponding image is not set based on the display position of the enlarged image.

According to the sixth aspect of the disclosure, the corresponding image may be displayed larger without overlapping the enlarged image than in a case where the display position of the corresponding image is not set based on the size of the margin surrounding the enlarged image.

According to the seventh aspect of the disclosure, when the enlarged image is to be displayed on the display, user workability may be enhanced, as compared with a case where the enlarged image is uniformly displayed regardless of whether or not the file information has been acquired.

According to the eighth aspect of the disclosure, when the enlarged image is to be displayed on the display, the user may readily predict the display position and the display size of the corresponding image, as compared with a case where the enlarged image is uniformly displayed regardless of whether or not the file information has been acquired.

According to the ninth aspect of the disclosure, the user may readily compare the enlarged image with the multiple corresponding images, as compared with a case where the multiple corresponding images are not displayed regardless of the fact that multiple pieces of file information have been acquired.

According to the tenth aspect of the disclosure, the user may readily compare the enlarged image with the multiple corresponding images, as compared with a case where all of the multiple corresponding images are not displayed on the display.

According to the eleventh aspect of the disclosure, the corresponding image may be displayed larger than in a case where the multiple corresponding images are not displayed in a switching manner on the display.

According to the twelfth aspect of the disclosure, user workability may be enhanced, as compared with a case where the enlarged image is not maintained in a displayed state.

According to the thirteenth aspect of the disclosure, the multiple corresponding images may be displayed larger than in a case where the enlarged image is not set in a non-displayed state.

According to the fourteenth aspect of the disclosure, the file information of the file more intended by the user may be acquired, as compared with a case where the user does not select a file, corresponding to the file information to be acquired, from the file extracted as a result of the searching process.

### Brief Description of the Drawings

Exemplary embodiments of the present disclosure will be described in detail based on the following figures, wherein:
Fig. 1 illustrates an overall configuration example of an information processing system according to an exemplary embodiment;
Fig. 2 is a block diagram illustrating an example of a hardware configuration of a server apparatus according to this exemplary embodiment;
Fig. 3 is a block diagram illustrating an example of a hardware configuration of each terminal apparatus according to this exemplary embodiment;
Fig. 4 is a block diagram illustrating an example of an operation screen according to this exemplary embodiment;
Fig. 5 illustrates an example of a search screen according to this exemplary embodiment;
Fig. 6 illustrates an example of an enlarged image according to this exemplary embodiment;
Figs. 7A and 7B illustrate examples of a corresponding image or images according to this exemplary embodiment, Fig. 7A illustrating a case where a single corresponding image is displayed, Fig. 7B illustrating a case where multiple corresponding images are displayed next to each other;
Figs. 8A and 8B each illustrate a process to be executed when a user performs a specific operation, Fig. 8A illustrating a state before a correspondence command image is selected, Fig. 8B illustrating a state after the correspondence command image is selected;
Figs. 9A and 9B illustrate other examples of correspondence command images, Fig. 9A illustrating a state where a correspondence command image is associated with a corresponding image, Fig. 9B illustrating a state after a correspondence command image included in a second set of images is selected;
Figs. 10A and 10B illustrate each correspondence command image associated with the state of a file, Fig. 10A illustrating a state before the correspondence command image is selected; Fig. 10B illustrating a state after the correspondence command image is selected;
Figs. 11A and 11B illustrate another example of the operation screen according to this exemplary embodiment, Fig. 11A illustrating a margin existing around the enlarged image, Fig. 11B illustrating a corresponding image displayed in the margin;
Figs. 12A and 12B illustrate an example of a menu bar according to this exemplary embodiment, Fig. 12A illustrating a case where the menu bar is shared between the enlarged image and the corresponding image, Fig. 12B illustrating a case where the menu bar is displayed separately for the enlarged image and the corresponding image;
Fig. 13 is a flowchart illustrating the flow of a process to be executed when file information of a file specified by the user is to be associated with one of icons on the search screen according to this exemplary embodiment; and
Fig. 14 is a flowchart illustrating the flow of a process to be executed when the enlarged image and the corresponding image according to this exemplary embodiment are to be displayed.

### Detailed Description

Exemplary embodiments of the present disclosure will be described in detail below with reference to the appended drawings.

### Overall Configuration of Information Processing System 1

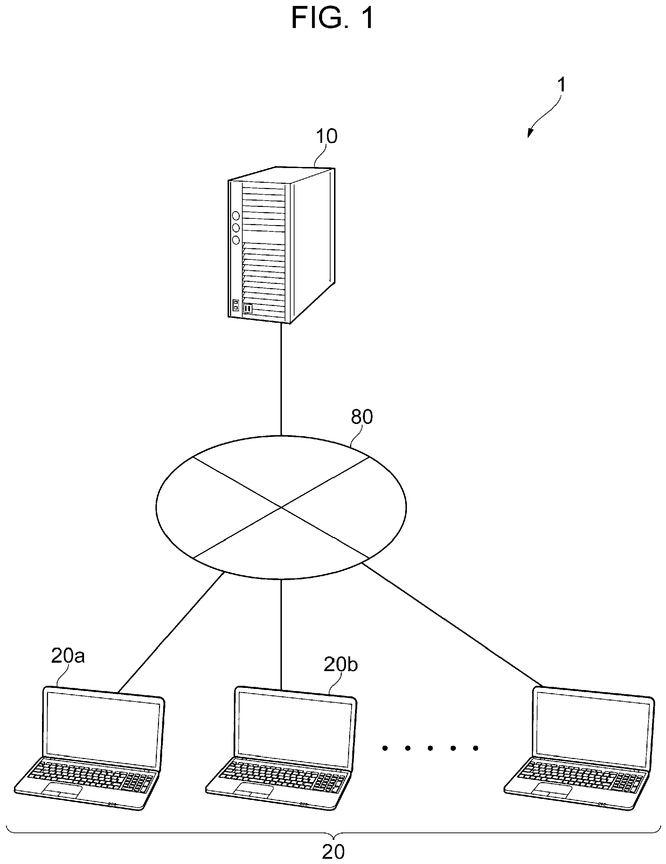

Fig. 1 illustrates an overall configuration example of an information processing system 1 according to an exemplary embodiment. The information processing system 1 according to this exemplary embodiment is configured by connecting a server apparatus 10, which manages files, and terminal apparatuses 20 (20a, 20b, and so on), which are used by users for browsing files, to each other via a communication line 80. The communication line 80 is, for example, the Internet and is used for information communication between the server apparatus 10 and the terminal apparatuses 20. In the information processing system 1 according to this exemplary embodiment, a file uploaded to the server apparatus 10 is to be browsed or edited in each terminal apparatus 20.

In this exemplary embodiment, the term "file" refers to an electronic file stored in, for example, the server apparatus 10. The file may include an image in addition to text, or may include an image alone without including text. In addition to document data and/or image data, file information about the file may contain image information to be used when converting document data into an image, as well as attribute information, such as the update time of the electronic file, the sheet size, the number of pages, and a keyword within the electronic file. An example of the file may be an electronic document. Examples of a storage location of the electronic document include a tray to be used by a user for exchanging the electronic document with a third party, a folder to be used for storing the electronic document, and a private box to be used for storing the electronic document shared with the user by the third party.

The server apparatus 10 manages files uploaded from the terminal apparatuses 20. Each file to be managed by the server apparatus 10 is shared by multiple users and may be edited by one or more users. The server apparatus 10 is realized by, for example, a computer. The server apparatus 10 may be configured by a single computer, or may be implemented in accordance with distributed processing by multiple computers.

Each terminal apparatus 20 is used for browsing or editing the files managed by the server apparatus 10. The terminal apparatus 20 has a display that displays an image corresponding to a file. The terminal apparatus 20 has a function for displaying an image for browsing multiple files in accordance with an operation performed by the user. The terminal apparatus 20 may be realized by, for example, a computer, a tablet information terminal, a smartphone, or another information processing apparatus.

Next, a hardware configuration of the server apparatus 10 will be described.

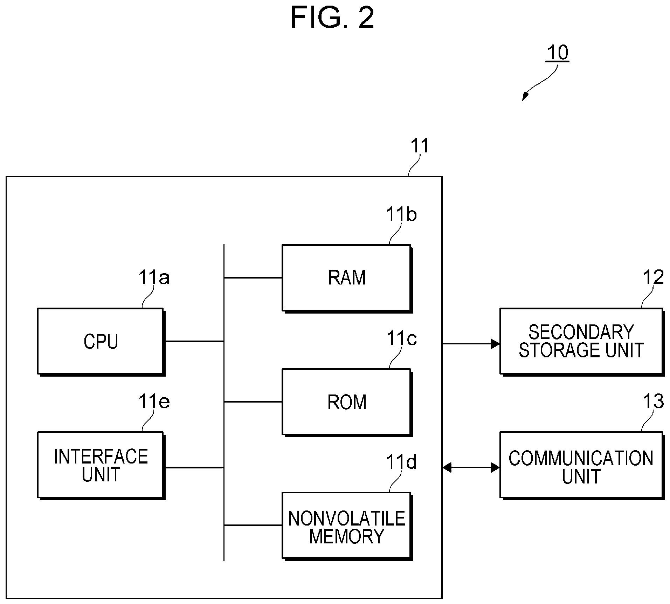

Fig. 2 is a block diagram illustrating an example of the hardware configuration of the server apparatus 10 according to this exemplary embodiment. The server apparatus 10 according to this exemplary embodiment includes an arithmetic unit 11 that executes a digital arithmetic process in accordance with a management program that implements file management, a secondary storage unit 12 that stores files, and a communication unit 13 that exchanges information via the communication line 80 (see Fig. 1).

The secondary storage unit 12 is realized by an existing information storage device, such as a hard disk drive (HDD), semiconductor memory, or magnetic tape.

The arithmetic unit 11 includes a central processing unit (CPU) 11a as an example of a processor that controls the entire apparatus, a random access memory (RAM) 11b used as a work memory of the CPU 11a, and a read-only memory (ROM) 11c that stores, for example, the management program to be executed by the CPU 11a. The arithmetic unit 11 also includes a rewritable nonvolatile memory 11d capable of retaining data even when not supplied with electric power, and an interface unit 11e that controls each unit, such as the communication unit 13, connected to the arithmetic unit 11.

The nonvolatile memory 11d is constituted of, for example, a static random access memory (SRAM) or a flash memory backed up by a battery, and stores file information of each file as well as correspondence information for associating files with each other. In addition to files, the secondary storage unit 12 stores the management program to be executed by the arithmetic unit 11. The arithmetic unit 11 reads the management program stored in the secondary storage unit 12, so that each process of the server apparatus 10 according to this exemplary embodiment is executed. The arithmetic unit 11, the secondary storage unit 12, and the communication unit 13 are connected to one another via a bus or a signal line.

The server apparatus 10 manages the files stored in the secondary storage unit 12. In response to a request from each terminal apparatus 20, the server apparatus 10 executes a process for acquiring a new file, a process for extracting a file, a process for associating files with each other, and a process for reflecting an updated content on a file. Furthermore, in response to a request from each terminal apparatus 20, the server apparatus 10 provides a file, an extraction result, file information, and update information to the terminal apparatus 20 that has made the request. The secondary storage unit 12 stores the file, and the communication unit 13 receives the request from the terminal apparatus 20 and transmits the requested file.

Next, a hardware configuration of each terminal apparatus 20 will be described.

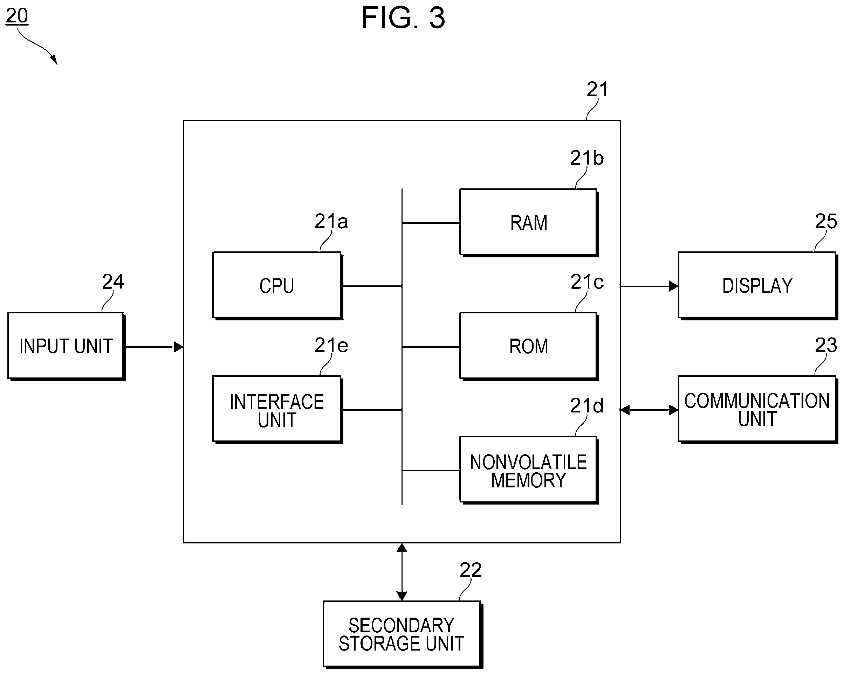

Fig. 3 is a block diagram illustrating an example of the hardware configuration of each terminal apparatus 20 according to this exemplary embodiment. Each terminal apparatus 20 according to this exemplary embodiment includes an arithmetic unit 21 that executes image display in accordance with a display program that implements image display, a secondary storage unit 22 that stores files, and a communication unit 23 that exchanges information via the communication line 80 (see Fig. 1).

The secondary storage unit 22 is realized by an existing information storage device, such as a hard disk drive (HDD), semiconductor memory, or magnetic tape. Furthermore, each terminal apparatus 20 is provided with an input unit 24 that receives an input operation from the user, as well as a display 25 formed of, for example, a liquid display panel or an electro-luminescence (EL) display panel that displays an image and/or text information to the user.

The arithmetic unit 21 includes a CPU 21a as an example of a processor that controls the entire apparatus, a RAM 21b used as a work memory of the CPU 21a, and a ROM 21c that stores, for example, the display program to be executed by the CPU 21a. The arithmetic unit 21 also includes a rewritable nonvolatile memory 21d capable of retaining data even when not supplied with electric power, and an interface unit 21e that controls each unit, such as the communication unit 23, connected to the arithmetic unit 21.

The nonvolatile memory 21d is constituted of, for example, a SRAM or a flash memory backed up by a battery, and stores an extraction result, file information, and update information. In addition to files, the secondary storage unit 22 stores the display program to be executed by the arithmetic unit 21. The arithmetic unit 21 reads the display program stored in the secondary storage unit 22, so that each process of the terminal apparatus 20 according to this exemplary embodiment is executed. The arithmetic unit 21, the secondary storage unit 22, and the communication unit 23 are connected to one another via a bus or a signal line.

The input unit 24 is, for example, a pointing device used by the user for performing an input operation.

For example, if the input unit 24 is a mouse device, the user may move a cursor or perform a clicking operation to designate a position or a displayed image on a screen of the display 25.

If the input unit 24 is a touchscreen, the user may touch the touchscreen with a finger or maintain the finger in a touched state longer than a predetermined time period, so as to designate a position or a displayed image on the screen. In this case, the input unit 24 is integrated with the display 25.

In addition to the pointing device mentioned above, the input unit 24 may include a keyboard used for performing a key input operation.

### Display on Display 25

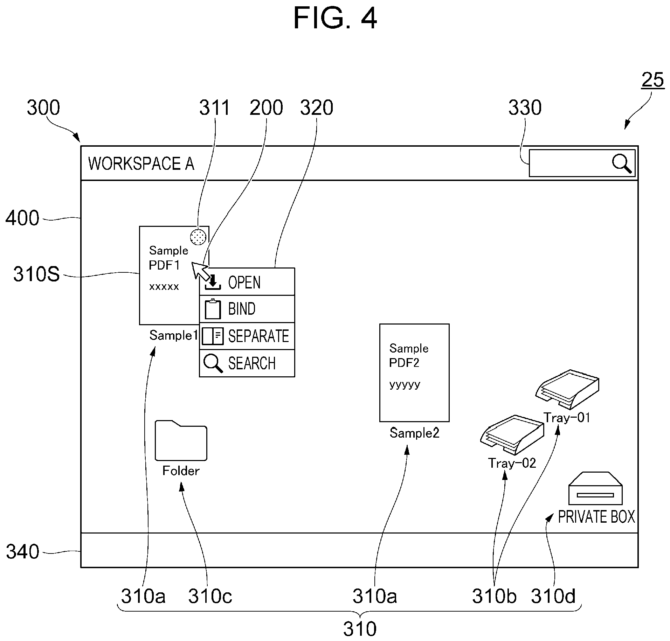

The following description relates to display on the display 25 with reference to Fig. 4.

Fig. 4 illustrates an example of an operation screen 300 according to this exemplary embodiment.

The display 25 displays the operation screen 300 that displays a region of at least a part of a workspace 400 of so-called file handling software and that serves as a screen for receiving an operation performed by the user. This file handling software digitizes and manages document data and has a function for facilitating unified management of paper and electronic data.

The workspace 400 may have an area larger than a region to be displayed on one screen without performing scrolling on the operation screen 300. The workspace 400 is a region where icons 310, to be described later, are arranged. The area of the workspace 400 may be changed in accordance with the arrangement of the icons 310. As the workspace 400, for example, another independent workspace 400 different from a "workspace A" may be provided.

The display 25 according to this exemplary embodiment displays a cursor 200 indicating a position or an image on the operation screen 300. The cursor 200 moves in accordance with an input operation performed by the user via the input unit 24, and is displayed to indicate a user-designated position or image on the screen.

In addition to the icons 310, the operation screen 300 displays an enlargement command image 311, a context menu 320, a search window 330, and a tool bar 340.

The search window 330 is an image that receives a so-called global search and receives a text-based searching operation targeted to all files within the workspace 400 displayed on the operation screen 300. The tool bar 340 is a group of indicators prepared for simplifying an operation to be performed by the user on a file displayed on the operation screen 300. Examples of the operation to be performed on a file include an operation for saving the file, an operation for printing the file, an operation for rotating the file, an operation for searching for the file, an operation for encrypting the file, and an operation for binding two or more electronic documents together.

The icons 310 indicate various types of functions, such as a program function, by using graphic symbols. Each icon 310 is displayed on the operation screen 300 of the display 25 and is an image corresponding to a file or the storage location of the file. The image receives a user command given to the file or the storage location of the file. Examples of the icons 310 include document icons 310a corresponding to respective documents having document names "Sample 1" and "Sample 2", tray icons 310b corresponding to respective trays having tray names "Tray-01" and "Tray-02", a folder icon 310c, and a private-box icon 310d. The document icons 310a, the tray icons 310b, the folder icon 310c, and the private-box icon 310d will be referred to as the icons 310 if they are not to be differentiated from one another.

Each document icon 310a is a file image corresponding to an electronic document. The document icon 310a may indicate the electronic document by using a graphic symbol or may be a thumbnail image for checking at least some of the contents of the document. For example, if the corresponding file is image data, the thumbnail image is displayed as an image obtained by simply reducing the original image. If the corresponding file is document data having multiple pages, the thumbnail image is displayed as an image obtained by reducing a representative page, such as the first page. The document icon 310a displayed as the thumbnail image functions as an icon for opening the corresponding file.

Although not shown in the drawings, if the document corresponding to the thumbnail image has multiple pages, an image indicating that the multiple pages are bound together or an image for receiving a change of the displayed page from the user may be displayed in association with the document icon 310a. In this exemplary embodiment, the term "page" refers to a group of data to be displayed at one time as a single page on the operation screen 300.

Each tray icon 310b is an image for selecting a tray to be used by the user for exchanging an electronic document with a third party. The folder icon 310c is an image for selecting a folder to be used for collectively storing electronic documents or for classifying the electronic documents. The private-box icon 310d is an image for selecting a private box to be used for storing an electronic document shared with the user by the third party.

For example, when any one of the icons 310 is selected from the tray icons 310b, the folder icon 310c, and the private-box icon 310d, a screen used for selecting an electronic document stored at the storage location corresponding to the selected icon 310 is displayed.

The enlargement command image 311 is for receiving a user command related to displaying of an enlarged image 360, to be described later. The enlargement command image 311 is displayed in association with the corresponding document icon 310a.

The enlargement command image 311 shown in Fig. 4 is for receiving a user command for displaying the enlarged image 360 corresponding to the document having the document name "Sample1".

Based on an operation performed by the user on the enlargement command image 311, the enlargement command image 311 receives a "command for temporarily displaying the enlarged image 360" or a "command for maintaining the enlarged image 360 in a displayed state". For example, a mouse-over operation performed on the enlargement command image 311 is the operation for temporarily displaying the enlarged image 360, and a clicking operation performed on the enlargement command image 311 is the operation for maintaining the enlarged image 360 in a displayed state.

In this exemplary embodiment, the enlargement command image 311 is displayed over the upper right corner of the corresponding document icon 310a. In this case, the enlargement command image 311 may be displayed so as not to reduce the visibility of the document icon 310a. For example, the enlargement command image 311 is displayed smaller than the document icon 310a.

Furthermore, the enlargement command image 311 may be displayed in a semi-transparent manner such that an area overlapping the document icon 310a is transparently visible. The display of the enlargement command image 311 may be varied in correspondence with the content of a command, such as "whether to receive a user command for temporarily displaying the enlarged image 360" or "whether to receive a user command for maintaining the enlarged image 360 in a displayed state".

The enlargement command image 311 may be displayed in association with not only the document icon 310a but also an icon 310 corresponding to the storage location of an electronic document, such as the tray icon 310b, the folder icon 310c, or the private-box icon 310d. The enlargement command image 311 of the icon 310 corresponding to this storage location receives a user command related to the display of the enlarged image 360 of an electronic document stored at the corresponding storage location and serving as a representative electronic document, such as an electronic document with the most-recent saved date and time.

The context menu 320 is an image that receives an operation performed by the user on a file or the enlarged image 360. The context menu 320 receives, for example, an operation for opening a file, an operation for binding two or more files together, an operation for separating bound files from each other, or a file searching operation.

The context menu 320 is displayed in association with an icon 310 (referred to as "selected icon 310S" hereinafter) selected by the user. In this case, the term "selected" refers to a selection made in accordance with an operation different from the operation performed by the user on the enlargement command image 311. For example, the context menu 320 is displayed when the cursor 200 is positioned in a region on the selected icon 310S but not on the enlargement command image 311 and a predetermined operation, such as a right-click operation, is performed.

In the example in Fig. 4, the selected icon 310S is the document icon 310a corresponding to the document having the document name "Sample 1", and the context menu 320 is displayed partially over the document icon 310a.

Furthermore, as shown in Fig. 4, the operation screen 300 may display text, such as the name of a file or a function corresponding to each icon 310, in association with each image. Moreover, text, such as the name of a file or a function, may be displayed in association with the enlarged image 360 to be described later.

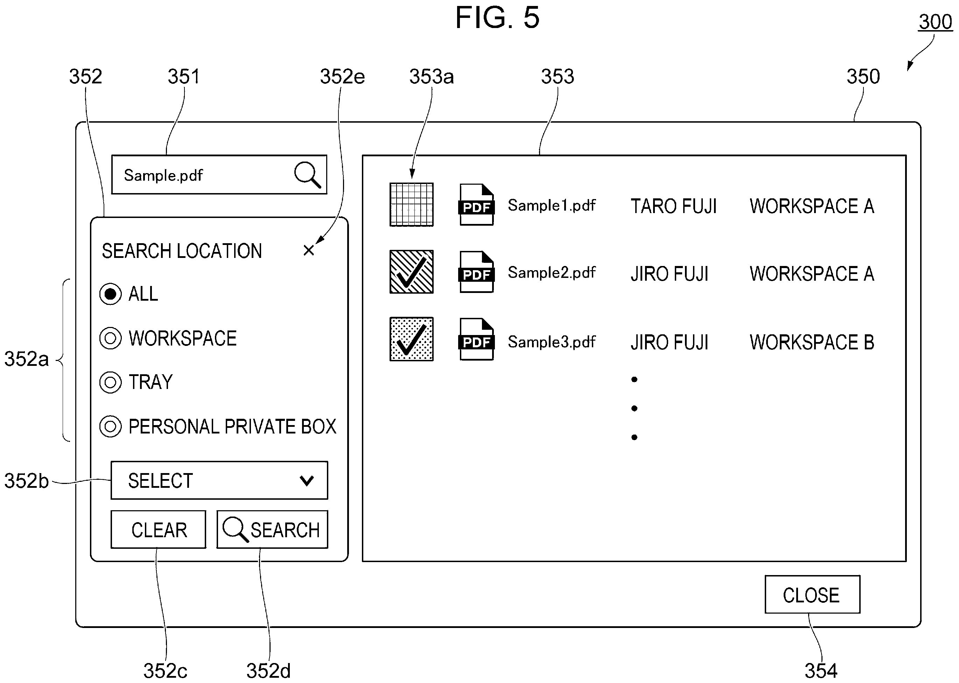

Next, a candidate screen that displays candidates of a file to be displayed as a corresponding image 370 to be described later and that receives an operation performed by the user for specifying a file will be described with reference to Fig. 5. The following description relates to a case where a search screen 350 is displayed as an example of the candidate screen.

Fig. 5 illustrates an example of the search screen 350 according to this exemplary embodiment.

The search screen 350 according to this exemplary embodiment receives search conditions to be set, such as a filename, a text string within a file, a file type, and a search location. Furthermore, the search screen 350 also displays a file that corresponds to the search conditions as a search result and receives an operation performed by the user for specifying the file from the search result.

The search screen 350 is displayed when, for example, the user performs an operation for selecting a "search" option in the context menu 320 shown in Fig. 4.

More specifically, as shown in Fig. 4, in this exemplary embodiment, when the user performs a predetermined operation by positioning the cursor 200 on the selected icon 310S, the context menu 320 is displayed. Then, when the user selects the "search" option in the context menu 320, the search screen 350 is displayed.

An example of the operation for selecting the "search" option includes a clicking operation performed on the "search" option. Alternatively, the search screen 350 may be displayed when the user gives a command for executing a search via the search window 330 or when the user selects a "search" option on the tool bar 340.

For example, the search screen 350 is displayed at the higher display hierarchy (i.e., toward the user's face) on the operation screen 300 than any of the icons 310 shown in Fig. 4. Furthermore, if the search screen 350 is linked with the "search" option in the context menu 320 of the selected icon 310S, the search screen 350 may be displayed without overlapping the selected icon 310S.

The search screen 350 has an input field 351 for receiving an input of a text string to be searched for, a setting field 352 for receiving a search range to be set, a specification field 353 for displaying a search result and receiving specification of a file, and a close button 354 for receiving an operation performed by the user for closing the search screen 350. The search for the text string input to the input field 351 is targeted to a filename or the contents of a file.

In the setting field 352, a select button 352a receives an operation for setting a search range for the text string "Sample.pdf" input to the input field 351 from, for example, "all", "workspace", "tray", and "personal private box" options.

The "all" option refers to a search performed not only on the workspace 400 (i.e., the "workspace A" in Fig. 4) displayed on the operation screen 300 but also another workspace 400 that is not displayed. In other words, the "all" option corresponds to a search range covering all the file storage locations displayable on the display 25 of the terminal apparatus 20 and is targeted to all the files that the user is authorized to browse.

The "workspace" option is targeted to the workspace 400 displayed on the operation screen 300 or to a range of a workspace 400 designated in a select field 352b. The targeted ranges of the "tray" and "personal private box" options are smaller than the range of the "workspace" option. The "tray" option is targeted to a tray range of a tray name designated in the select field 352b. The "personal private box" option is targeted to a range of a personal private box.

A clear button 352c receives an operation performed by the user for deleting the set search range. A search button 352d receives an operation performed by the user for executing a search within the set range. A non-display button 352e receives an operation performed by the user for setting the setting field 352 to a non-displayed state or for reducing the display of the setting field 352.

In the specification field 353, a search result is displayed. The specification field 353 displays files corresponding to the search conditions as candidates of a file to be displayed as a corresponding image 370 (to be described later). In the example in Fig. 5, document names "Samplel.pdf", "Sample2.pdf", and "Sample3.pdf" as filenames are displayed as the "files corresponding to the search conditions".

As an alternative to this display example in which the file storage locations are displayed in units of workspaces, the file storage locations may be displayed in units of trays, folders, or private boxes. Furthermore, in addition to the information about the file type, the filename, and the storage location, the specification field 353 may display information about the updated date and time, the created date and time, the creator, and the file volume. These pieces of information are displayed together with any one of or a combination of a thumbnail image, a graphic symbol, and text.

Each of checkboxes 353a receives an operation performed by the user for selecting a file from the files corresponding to the search conditions. This "operation for selecting a file" is an example of an operation performed by the user for specifying a file corresponding to the file information acquired from the server apparatus 10.

The display modes of the multiple checkboxes 353a are different from one another. The checkboxes 353a are displayed with different colors or different shapes.

An image for receiving an operation for collectively selecting the multiple checkboxes 353a may be further displayed.

Although the above description relates to a case where the user specifies a file from the results of a search performed by the user, the file to be specified by the user is not limited to a file included in the search result.

For example, files browsed in the past by the user may be displayed on the operation screen 300, and a file selected by the user from these displayed files may be specified.

Alternatively, for example, files relevant to the file corresponding to the selected icon 310S (see Fig. 4) selected by the user may be displayed on the operation screen 300, and a file selected by the user from these displayed files may be specified.

In the case where files browsed in the past by the user are to be displayed on the operation screen 300, only a file that satisfies a predetermined condition may be displayed instead of displaying all the files browsed in the past by the user.

In detail, for example, conditions, such as a file browsing method, a file browsing period, a file browsing time, and the number of times a file has been browsed may be set in advance, and a file that has been browsed in a browsing mode that satisfies these conditions may be displayed on the operation screen 300.

In the case where files relevant to the file corresponding to the selected icon 310S selected by the user are to be displayed on the operation screen 300, for example, files relevant to the contents of the file corresponding to the selected icon 310S are displayed.

An example of such "relevant files" includes files containing a text string included in the file corresponding to the selected icon 310S. This text string may be located in a filename or in a keyword within a document.

Although the user performs the operation for specifying a file from the file candidates in the example shown in Fig. 5, this specification by the user is not limited to the specification of a file from the candidates.

For example, in a case where the user selects one of the icons 310 displayed on the operation screen 300, a file corresponding to this one icon 310 may be the file specified by the user.

In this exemplary embodiment, file information about the aforementioned file specified by the user is associated with the file corresponding to the selected icon 310S.

Then, in this exemplary embodiment, when the enlarged image 360 corresponding to the selected icon 310S is to be displayed on the operation screen 300, as will be described later, the corresponding image 370 (to be described later) corresponding to this file specified by the user is additionally displayed.

A file to be associated with the file corresponding to the selected icon 310S is not limited to the file specified by the user from the aforementioned search result. For example, all the files corresponding to the aforementioned search conditions may be associated with the file corresponding to the selected icon 310S.

Alternatively, for example, all the files relevant to the file corresponding to the selected icon 310S and the file information about all the files browsed in the past by the user may be associated with the file corresponding to the selected icon 310S.

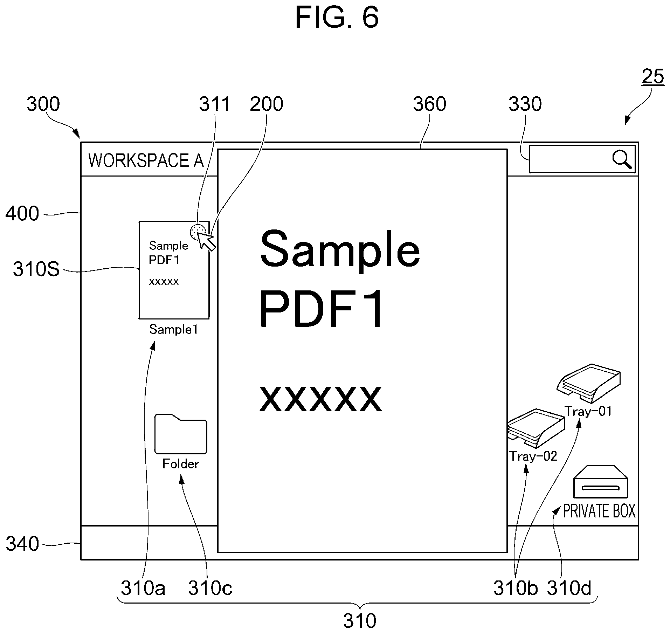

The following description with reference to Fig. 6 relates to the enlarged image 360 to displayed in a case where one of the icons 310 displayed on the display 25 is selected. In this example, a command for displaying the enlarged image 360 is given by using the cursor 200.

Fig. 6 illustrates an example of the enlarged image 360 according to this exemplary embodiment.

As described above, in this exemplary embodiment, when the user selects the selected icon 310S, the enlarged image 360 shown in Fig. 6 is displayed and is maintained in the displayed state.

In this exemplary embodiment, after the searching process shown in Figs. 4 and 5, the search screen 350 shown in Fig. 5 is closed, so that the screen returns to the operation screen 300 shown in Fig. 4.

The user performs an operation again on the selected icon 310S on the operation screen 300 shown in Fig. 4. Accordingly, the enlarged image 360 shown in Fig. 6 is displayed and is maintained in the displayed state.

More specifically, the user performs a clicking operation on the enlargement command image 311 displayed on the selected icon 310S. Accordingly, as shown in Fig. 6, the enlarged image 360 is displayed and is maintained in the displayed state.

In this exemplary embodiment, the enlarged image 360 is displayed without activation of a new program.

The enlarged image 360 is obtained by enlarging the selected icon 310S. In this exemplary embodiment, the display contents displayed on the selected icon 310S serving as a thumbnail image are also displayed in the enlarged image 360.

The display contents displayed in the selected icon 310S do not necessarily have to be the same as the display contents displayed in the enlarged image 360. Information linked with a file displayed in accordance with the selected icon 310S or information contained in this file may be displayed as a part of the enlarged image 360.

The enlarged image 360 is an example of an enlarged image corresponding to a file image and displayed larger in size than the file image.

The enlarged image 360 has a display size large enough such that the contents of the file corresponding to the selected icon 310S are recognizable.

The display position of the enlarged image 360 is, for example, set in accordance with the display position of the selected icon 310S.

Although the enlarged image 360 is displayed such that the selected icon 310S and the enlarged image 360 do not overlap each other in the display example in Fig. 6, the display mode is not limited to this.

For example, the enlarged image 360 may be displayed in a state where a part of the selected icon 310S and the enlarged image 360 overlap each other.

Furthermore, in this exemplary embodiment, the enlarged image 360 is displayed such that it is recognizable that the enlarged image 360 is associated with the selected icon 310S. In detail, the enlarged image 360 is displayed around the selected icon 310S.

The resolution of the enlarged image 360 is not particularly limited, and may be higher than the resolution of the selected icon 310S.

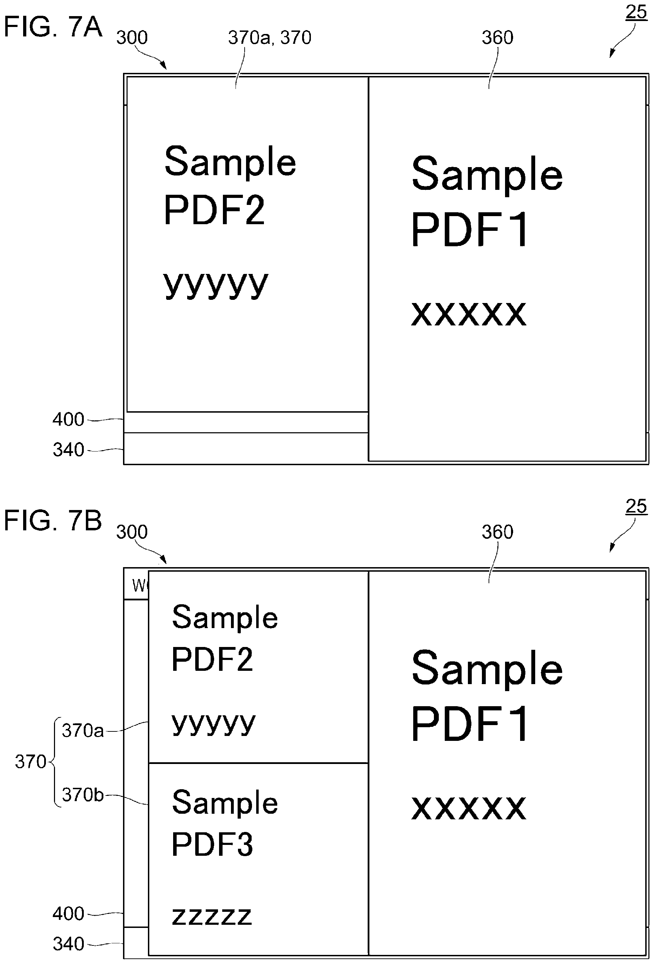

Next, the corresponding image 370 to be displayed when the enlarged image 360 is displayed on the display 25 will be described with reference to Figs. 7A and 7B.

Figs. 7A and 7B illustrate examples of the corresponding image or images 370 according to this exemplary embodiment. Specifically, Fig. 7A illustrates a case where a single corresponding image 370 is displayed, and Fig. 7B illustrates a case where multiple corresponding images 370 are displayed next to each other.

In the display examples in Figs. 7A and 7B, the enlarged image 360 and the corresponding image or images 370 (370a, 370b) are displayed on the operation screen 300 of the display 25.

In these display examples, the enlarged image 360 and the corresponding image or images 370 are displayed on the operation screen 300 without overlapping each other.

In this exemplary embodiment, each corresponding image 370 is displayed without activation of a new program.

As described above, in this exemplary embodiment, the user specifies a file from the search result or the browsing history. The corresponding image 370 corresponds to this file specified by the user.

In other words, the corresponding image 370 corresponds to a file preliminarily specified by the user before a command is given for displaying the enlarged image 360. More specifically, the corresponding image 370 corresponds to a file specified by the user before the enlarged image 360 is to be displayed with the selection of the selected icon 310S.

In this exemplary embodiment, the corresponding image 370 is displayed on the operation screen 300 in a state where the enlarged image 360 is displayed on the operation screen 300.

The corresponding image 370 is an example of a corresponding image corresponding to file information serving as information about a file specified by the user.

As described above, in this exemplary embodiment, the selected icon 310S selected by the user is associated with file information serving as information about a file specified by the user. When the enlarged image 360 is to be displayed, this association is reflected on the display.

In accordance with this reflection of the association, the corresponding image 370 is displayed when the enlarged image 360 is displayed.

When the corresponding image 370 is to be displayed, the display mode of the checkbox 353a (see Fig. 5) having received an operation for specifying the corresponding file may be reflected on the display.

For example, the corresponding image 370 may be displayed while being surrounded by a line having the same color as the color of the corresponding checkbox 353a.

In detail, in this exemplary embodiment, the checkboxes 353a are given different colors, as shown on the search screen 350 in Fig. 5.

When the corresponding image 370 corresponding to the file specified in accordance with the selection of any of the checkboxes 353a is to be displayed, for example, the outer edge of the corresponding image 370 may be given the color given to the selected checkbox 353a.

The corresponding image 370 (see Figs. 7A and 7B) has a display size larger than that of each icon 310 (see Fig. 4) displayed on the operation screen 300. More specifically, the display size of the corresponding image 370 is larger than that of the selected icon 310S (see Fig. 6) serving as a display source of the enlarged image 360.

If there is an icon 310 corresponding to the corresponding image 370, the display size of the corresponding image 370 is larger than the display size of this corresponding icon 310.

Although an icon 310 corresponding to each corresponding image 370 (see Figs. 7A and 7B) is not displayed in the display example in Fig. 6, for example, it is also assumable that this icon 310 corresponding to the corresponding image 370 exists on a workspace 400 different from the "workspace A" shown in Fig. 6. In this case, in this exemplary embodiment, the display size of the corresponding image 370 may be larger than the display size of this corresponding icon 310.

For displaying each corresponding image 370 (see Figs. 7A and 7B) and the enlarged image 360, the corresponding image 370 and the enlarged image 360 may have at least the same length in the vertical direction or the same width in the horizontal direction.

The display position of the corresponding image 370 is set in accordance with the display position of the enlarged image 360.

Furthermore, the display position of the enlarged image 360 with reference to the display position of the corresponding image 370 varies between a case where the file information of the file to be displayed as the corresponding image 370 has been acquired and a case where this file information has not been acquired.

In other words, the display position of the enlarged image 360 varies between a case where the aforementioned file has been specified by the user and a case where the aforementioned file has not been specified by the user.

In this exemplary embodiment, if the aforementioned file information has not been acquired and the enlarged image 360 alone is to be displayed, the display position of the enlarged image 360 is located toward the middle of the operation screen 300, as shown in Fig. 6.

If the file information has been acquired and the enlarged image 360 is to be displayed together with the corresponding image or images 370, the display position of the enlarged image 360 is located toward an edge of the operation screen 300, as shown in Figs. 7A and 7B.

In other words, if the aforementioned file has been specified by the user and the file information has been acquired, the display position of the enlarged image 360 is located toward an edge of the operation screen 300, as shown in Figs. 7A and 7B.

More specifically, if the aforementioned file has been specified by the user and each corresponding image 370 is to be displayed, the display position of the enlarged image 360 is changed for ensuring the display region of the corresponding image 370.

In this exemplary embodiment, there may be a case where multiple pieces of file information are associated with the selected icon 310S. In this case, for example, multiple corresponding images 370 are all displayed, as in the display example in Fig. 7B showing the corresponding images 370 (370a and 370b).

This example corresponds to a case where two pieces of file information are associated with the selected icon 310S. In this case, two corresponding images 370 are all displayed, as shown in the display example in Fig. 7B.

Alternatively, one or some of the multiple corresponding images 370 may be displayed.

The expression "one or some of the corresponding images 370" refers to, for example, a corresponding image or images 370 the number of which is smaller than or equal to a predetermined threshold value.

For example, in a case where the predetermined value is set to 2, if the number of corresponding images 370 exceeds 2, the expression "one or some of the corresponding images 370" refers to two corresponding images 370.

If one or some of the corresponding images 370 are to be displayed in this manner without displaying all of the corresponding images 370, for example, the display may be switched in accordance with a user command such that one or some of the corresponding images 370 to be displayed may be switched.

In the display example in Fig. 7B, the display size of each of the corresponding images 370a and 370b is smaller than that of the corresponding image 370a shown in Fig. 7A.

However, if there is enough display region on the operation screen 300, the corresponding images 370a and 370b may be displayed in Fig. 7B with the same display size as the corresponding image 370a shown in Fig. 7A.

Furthermore, the display positions of the multiple corresponding images 370 are not limited to the positions located next to each other in the vertical direction, and may be located side-by-side in the horizontal direction.

As an alternative to the above example where each corresponding image 370 is to be displayed when a command for displaying the enlarged image 360 is given by the user, the corresponding image 370 may be displayed when the user performs a specific operation instead of giving the command for displaying the enlarged image 360.

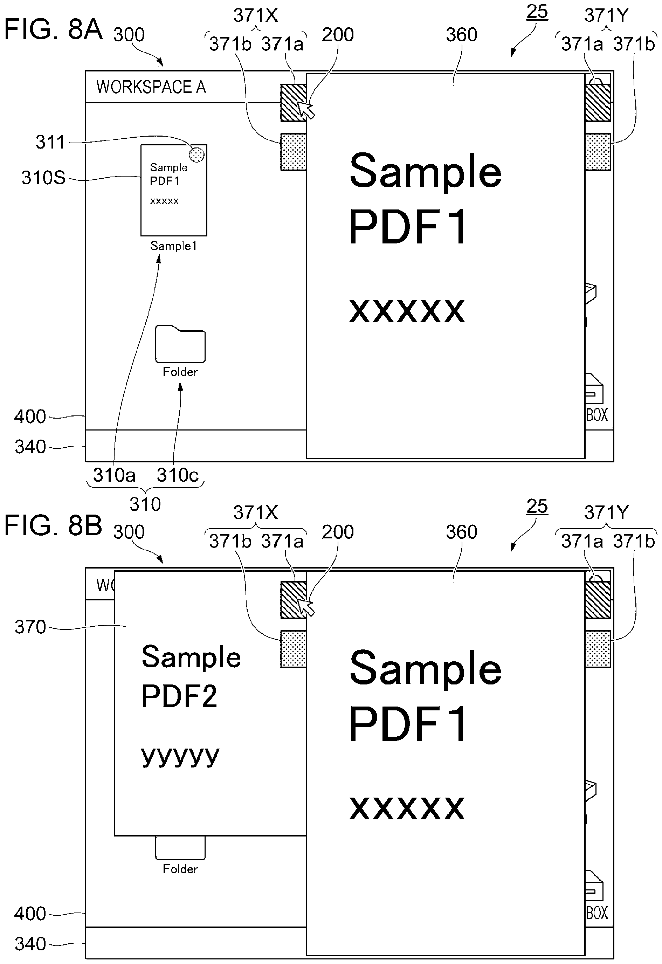

Figs. 8A and 8B each illustrate a process to be executed when the user performs the specific operation. Specifically, Fig. 8A illustrates a state before a correspondence command image 371a is selected, and Fig. 8B illustrates a state after the correspondence command image 371a is selected.

In the display example in Fig. 8A, the enlarged image 360 and correspondence command images 371a and 371b for receiving a command for displaying the corresponding images 370 are displayed on the operation screen 300 of the display 25. The correspondence command images 371a and 371b will be referred to as the correspondence command images 371 if they are not to be differentiated from each other.

In the display example in Fig. 8A, file information is already associated with the selected icon 310S. In other words, Fig. 8A is a display example where the user has already specified a file and the file information is associated with the file indicated by the selected icon 310S serving as a display source of the enlarged image 360, similar to the above description.

In the display example in Fig. 8A, the enlarged image 360 is displayed toward an edge of the operation screen 300. In detail, in the display example in Fig. 8A, the enlarged image 360 is displayed toward the right side of the operation screen 300.

Alternatively, the enlarged image 360 may be displayed toward the middle of the operation screen 300. If the user has performed an operation for selecting the correspondence command image 371a, the enlarged image 360 may be moved such that the display position of the enlarged image 360 is relocated from the middle toward an edge of the operation screen 300.

In this exemplary embodiment, each correspondence command image 371 is displayed while being associated with the enlarged image 360. The correspondence command image 371 indicates that the aforementioned file information serving as information about the file specified by the user has been acquired.

In other words, the correspondence command image 371 corresponds to the file information serving as information about the file specified by the user. Each of the correspondence command images 371 (371a and 371b) corresponds to each piece of file information.

Furthermore, the correspondence command image 371 is an image for receiving a command for displaying the corresponding image 370 shown in Fig. 8B from the user.

In this exemplary embodiment, for example, when the user performs a clicking operation on the correspondence command image 371, the corresponding image 370 is displayed, as shown in Fig. 8B.

The display mode of each correspondence command image 371 is based on the display mode of each checkbox 353a (see Fig. 5) that receives an operation performed by the user for specifying a file. In detail, in this exemplary embodiment, the color and the shape of each checkbox 353a is reflected on each correspondence command image 371.

In the example shown in Fig. 8A, multiple sets of correspondence command images 371 are displayed.

In the example shown in Fig. 8A, a first set of correspondence command images 371 (referred to as "first set of images 371X" hereinafter) are displayed to the left of the enlarged image 360. Moreover, a second set of correspondence command images 371 (referred to as "second set of images 371Y" hereinafter) are displayed to the right of the enlarged image 360.

In the display example in Fig. 8A, if the user selects the correspondence command image 371a included in the first set of images 371X, the corresponding image 370 corresponding to the correspondence command image 371a is displayed, as shown in Fig. 8B.

The display position of this corresponding image 370 is set in accordance with the display position of the enlarged image 360 and the display position of the correspondence command image 371a included in the first set of images 371X selected by the user.

In a case where the corresponding image 370 corresponding to the correspondence command image 371a is displayed, this correspondence command image 371a selected by the user may be set to a non-displayed state.

In this case, an area of the corresponding image 370 (see Fig. 8B) located behind the correspondence command image 371a included in the first set of images 371X is displayed, thereby improving the visibility of the corresponding image 370 for the user.

In this exemplary embodiment, each correspondence command image 371 is displayed in association with the enlarged image 360 even after the corresponding image 370 is displayed, as shown in Fig. 8B.

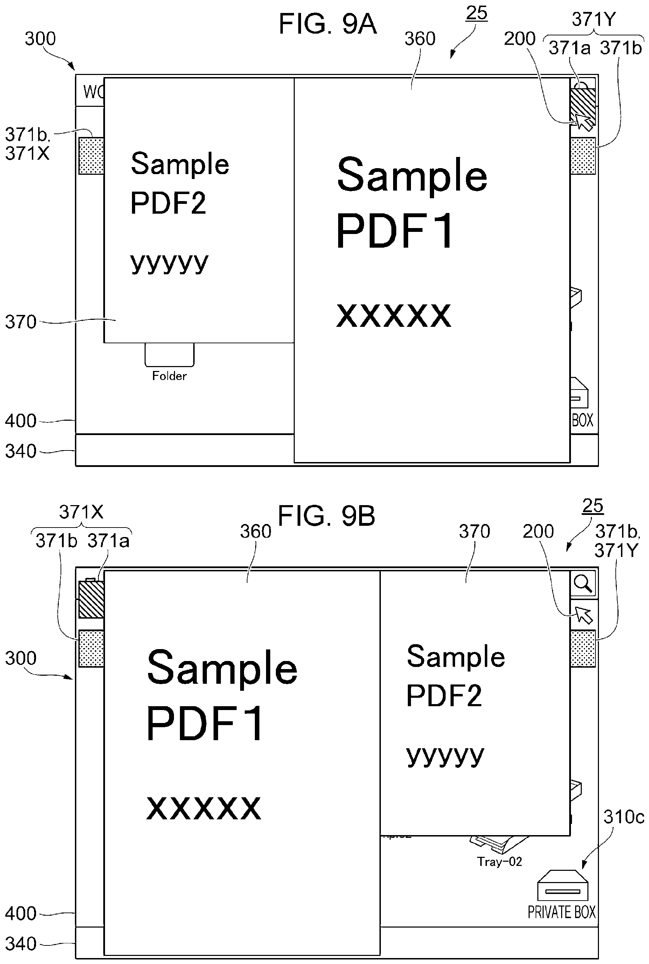

In addition to this display, each correspondence command image 371 may be displayed in association with the corresponding image 370, as shown in Figs. 9A and 9B (illustrating other display examples of the correspondence command images 371).

In the display example in Fig. 9A, the enlarged image 360, the corresponding image 370, the first set of images 371X, and the second set of images 371Y are displayed on the operation screen 300 of the display 25.

Furthermore, in the display example in Fig. 9A, the first set of images 371X are displayed in association with the corresponding image 370.

In contrast to the example shown in Fig. 8B in which the first set of images 371X are displayed in association with the enlarged image 360, the first set of images 371X in the example in Fig. 9A are displayed in association with the corresponding image 370.

In the display example in Fig. 9A, the correspondence command image 371a selected by the user and shown in Fig. 8A is in a non-displayed state.

On the other hand, in the display example in Fig. 9A, the correspondence command image 371b different from the correspondence command image 371a selected by the user is maintained in a displayed state. In other words, the correspondence command image 371b included in the first set of images 371X including the correspondence command image 371a selected by the user is maintained in a displayed state.

In the display example in Fig. 9A, the correspondence command images 371a and 371b included in the second set of images 371Y are also maintained in a displayed state.

In the display example shown in Fig. 9A, the first set of images 371X are displayed without overlapping the corresponding image 370. Accordingly, a situation where the corresponding image 370 is partially located behind the first set of images 371X is avoided, thereby improving the visibility of the corresponding image 370 for the user.

In contrast to the display example in Fig. 8B in which the corresponding image 370 is partially located behind the first set of images 371X, a situation where the corresponding image 370 is located behind the first set of images 371X is avoided in the display example in Fig. 9A, thereby improving the visibility of the corresponding image 370 for the user.

Next, a process to be executed when the user performs an operation on one of the correspondence command images 371 included in the second set of images 371Y will be described.

As shown in Fig. 9A, if the user selects, for example, the correspondence command image 371a included in the second set of images 371Y in a state where the corresponding image 370 is already displayed, the display position of the corresponding image 370 is changed in this process example.

In detail, in this process example, if the user selects the correspondence command image 371a included in the second set of images 371Y, the display position of the enlarged image 360 and the display position of the corresponding image 370 are inverted, as shown in Fig. 9B.

In detail, when the user performs an operation while facing the display 25, the enlarged image 360 is located at the left side and the corresponding image 370 is located at the right side.

In the display example in Fig. 9B, the second set of images 371Y are displayed in association with the corresponding image 370.

In contrast to the example shown in Fig. 9A in which the second set of images 371Y are displayed in association with the enlarged image 360, the second set of images 371Y are displayed in association with the corresponding image 370 in the display example in Fig. 9B.

Furthermore, in contrast to the example shown in Fig. 9A in which the first set of images 371X are displayed in association with the corresponding image 370, the first set of images 371X are displayed in association with the enlarged image 360 in the display example in Fig. 9B.

As shown in Figs. 9A and 9B, in this exemplary embodiment, the display position of the corresponding image 370 is set in accordance with the display position of the enlarged image 360 and the display position of the correspondence command image 371a selected by the user. In other words, the display position of the corresponding image 370 is determined in accordance with the display position of the enlarged image 360 and the display position of the correspondence command image 371a selected by the user.

Moreover, in this exemplary embodiment, for example, it is also assumable that the correspondence command image 371b included in the first set of images 371X shown in Fig. 9A may be selected by the user.

In this case, the display of the corresponding image 370 is switched such that a corresponding image corresponding to the correspondence command image 371b is displayed. This switch is performed while the enlarged image 360 is maintained in a displayed state.

Furthermore, in this exemplary embodiment, the display is similarly switched in a case where the user selects the correspondence command image 371b (see Fig. 9B) included in the second set of images 371Y.

For example, if the user selects the correspondence command image 371b included in the second set of images 371Y shown in Fig. 9A, the display of the corresponding image 370 is switched, and the display position of the enlarged image 360 and the display position of the corresponding image are inverted.

Instead of switching the displayed corresponding image 370, a corresponding image corresponding to the correspondence command image 371b may be additionally displayed.

In this case, for example, multiple corresponding images 370 are displayed, as shown in the display example in Fig. 7B. In other words, in this case, a corresponding image corresponding to the correspondence command image 371b is additionally displayed.

Although the above description relates to an example where the enlarged image 360 is maintained in a displayed state without switching the display for the enlarged image 360, the example is not limited to this.

For example, if the user specifies multiple files and acquires multiple pieces of file information and if a predetermined condition is satisfied, the enlarged image 360 may be set to a non-displayed state, and multiple corresponding images 370 may be displayed.

An example of the "predetermined condition" includes a case where the user gives a command for setting the enlarged image 360 to a non-displayed state. Another example of the "predetermined condition" includes a case where the display command given by the user is targeted to a large number of corresponding images 370 and this number exceeds a predetermined threshold value.

A yet another example of the "predetermined condition" includes a case where one of the correspondence command images 371 is selected by the user.

In detail, for example, in Fig. 9A, in a case where the correspondence command image 371b included in the first set of images 371X is selected by the user, the enlarged image 360 is set to a non-displayed state, and the corresponding image 370 corresponding to the correspondence command image 371b is displayed.

As another alternative, the state of a file specified by the user may be reflected on the correspondence command image 371 corresponding to the file specified by the user.

In this exemplary embodiment, the state of a file may be changed during a period from when the user specifies the file to when the corresponding image 370 corresponding to this file is displayed. More specifically, for example, the contents of the file may be updated, the file may be deleted, or a file browsing restriction may be set during a period from when the user specifies the file to when the corresponding image 370 corresponding to this file is displayed.

With the state of the file being reflected on the correspondence command image 371, the user may view the correspondence command image 371 to ascertain the state of the file.

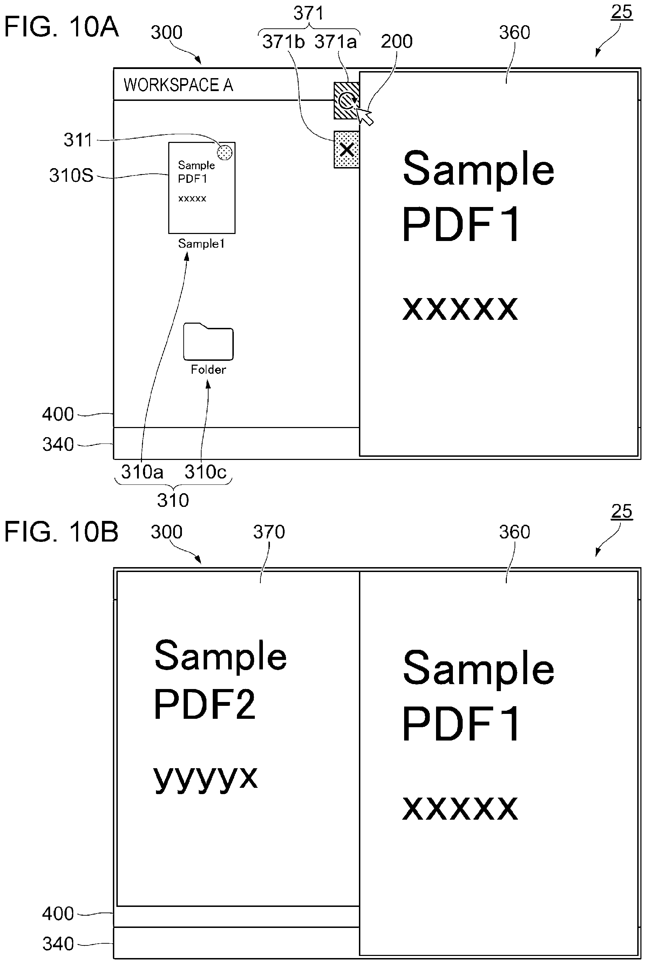

Figs. 10A and 10B illustrate each correspondence command image 371 associated with the state of a file.

Fig. 10A illustrates the state before the correspondence command image 371a is selected, and Fig. 10B illustrates the state after the correspondence command image 371a is selected.

In the display example in Fig. 10A, the enlarged image 360 and the correspondence command images 371 (371a and 371b) are displayed on the operation screen 300 of the display 25.

The display example in Fig. 10A indicates a case where the state of a file corresponding to each of the correspondence command images 371a and 371b has been changed.

In this exemplary embodiment, the contents of a file indicated by the correspondence command image 371a have been updated after the file is specified by the user.

In this case, in this exemplary embodiment, as shown in Fig. 10A, an image indicating that the contents of the file have been updated is added to the correspondence command image 371a.

Furthermore, in this exemplary embodiment, a file indicated by the correspondence command image 371b has been deleted after the file is specified by the user.

In this case, in this exemplary embodiment, as shown in Fig. 10A, an image indicating that the file has been deleted is added to the correspondence command image 371b.

Additionally, as mentioned above, a file browsing restriction may be set. In this case, an image indicating that the browsing restriction is set is added to the correspondence command image 371.

If the user selects the correspondence command image 371a in the display example in Fig. 10A, the corresponding image 370 corresponding to the correspondence command image 371a is displayed, as shown in Fig. 10B.

With regard to the file corresponding to the correspondence command image 371a, the contents of the file have been updated. In this display example, as shown in Fig. 10B, text information "yyyyx" is displayed together with the displayed corresponding image 370.

In this exemplary embodiment, before the contents of the file are updated, text information "yyyyy" is displayed together with the displayed corresponding image 370 corresponding to the correspondence command image 371a, as shown in Fig. 8B.

In contrast, after the contents of the file are updated, text information "yyyyx" is displayed, as shown in Fig. 10B.

Accordingly, in this exemplary embodiment, the latest state of the file specified by the user is reflected on the corresponding image 370.

When the corresponding image 370 is to be displayed, the contents of the file before being updated may be displayed instead of displaying the latest contents of the file specified by the user.

More specifically, for example, the user may be inquired about which state is to be displayed, and the corresponding image 370 in the state selected by the user in response to this inquiry may be displayed.

Furthermore, in this display example shown in Fig. 10A, if the user selects the correspondence command image 371b, the corresponding image 370 corresponding to the correspondence command image 371b is not to be displayed.

The file corresponding to the correspondence command image 371b has already been deleted, and the corresponding image 370 corresponding to the correspondence command image 371b is not to be displayed.

If the browsing restriction is set against the file corresponding to the correspondence command image 371b, the corresponding image 370 corresponding to the correspondence command image 371b is similarly not to be displayed.

The above example relates to a case where the display position of the enlarged image 360 is changed depending on whether or not file information has been acquired. In other words, the display position of the enlarged image 360 is changed depending on whether or not a file has been specified by the user.

In detail, in the above example, if file information has been acquired, the display position of the enlarged image 360 is located toward an edge of the operation screen 300 so that the enlarged image 360 and the corresponding image 370 are arranged side-by-side.

Meanwhile, the display mode is not limited to this. The display position of the enlarged image 360 may be set as a fixed location, such as around the selected icon 310S, regardless of whether or not a file has been specified by the user.

In this case, when the corresponding image 370 is to be displayed, for example, the corresponding image 370 is displayed where the margin is large. The following description relates to a process example in which the corresponding image 370 is displayed where the margin is large.

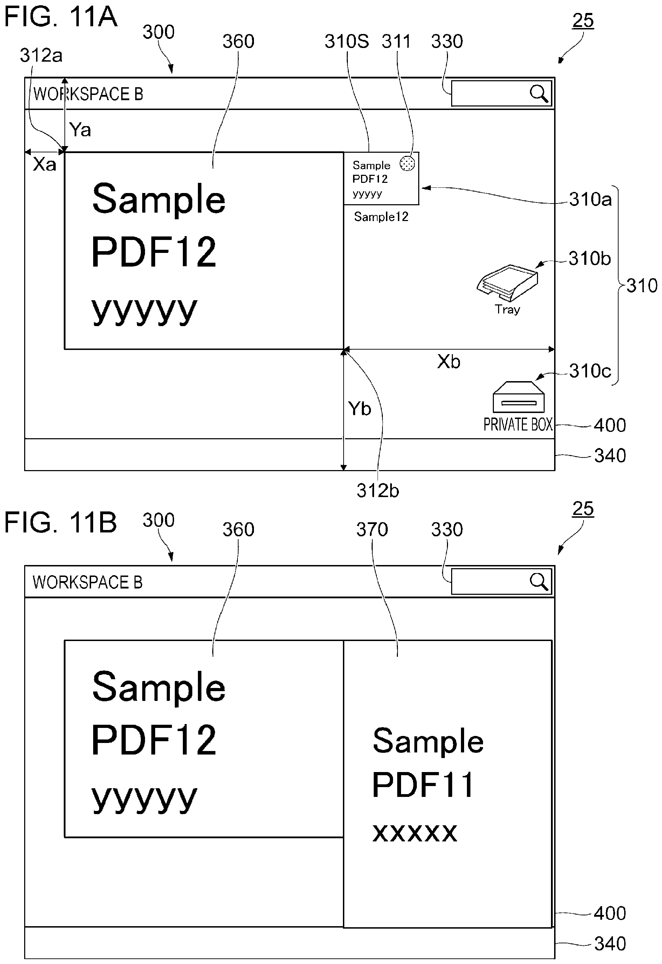

Figs. 11A and 11B illustrate another example of the operation screen 300 according to this exemplary embodiment. Specifically, Fig. 11A illustrates a margin existing around the enlarged image 360, and Fig. 11B illustrates the corresponding image 370 displayed in the margin.

In the display example in Figs. 11A and 11B, the corresponding image 370 and the enlarged image 360 corresponding to the selected icon 310S are displayed on a "workspace B".

In this display example, the display position of the enlarged image 360 is set in accordance with the display position of the selected icon 310S selected by the user. In other words, in this display example, the display position of the enlarged image 360 is determined in accordance with the display position of the selected icon 310S selected by the user.

In detail, for example, as shown in Fig. 11A, the display position of the enlarged image 360 is located adjacent to the selected icon 310S selected by the user.

As shown in Fig. 11A, the distance from a reference position 312a at the upper left corner of the enlarged image 360 to the left edge of the operation screen 300 will be defined as Xa, and the distance to the upper edge will be defined as Ya. The distance from a reference position 312b at the lower right corner of the enlarged image 360 to the right edge of the operation screen 300 will be defined as Xb, and the distance to the lower edge will be defined as Yb. The distances Xa, Xb, Ya, and Yb are proportional to the dimensions of the margin existing around the enlarged image 360.

In this exemplary embodiment, information about each of the distances Xa, Xb, Ya, and Yb is acquired.

In this exemplary embodiment, the display position of the corresponding image 370 is set based on the information about each of the distances Xa, Xb, Ya, and Yb.

In other words, in this exemplary embodiment, the display position of the corresponding image 370 is set based on the dimensions of the margin existing around the enlarged image 360.

When the distances Xa and Xb shown in Fig. 11A are compared with each other, the distance Xb is greater than the distance Xa. Accordingly, in this case, it is determined that the margin located to the right of the enlarged image 360 is larger than the margin located to the left of the enlarged image 360.

In this case, in this process example, the display position of the corresponding image 370 is set to the right of the enlarged image 360, such that the corresponding image 370 is displayed at the right side of the enlarged image 360, as in Fig. 11B.

As shown in Fig. 11B, instead of arranging the corresponding image 370 and the enlarged image 360 in the horizontal direction, the corresponding image 370 and the enlarged image 360 may be arranged in the vertical direction.

In this case, the distances Ya and Yb shown in Fig. 11A are compared with each other.

In this display example, the distance Yb is greater than the distance Ya. Accordingly, in this case, it is determined that the margin located below the enlarged image 360 is larger than the margin located above the enlarged image 360.

In this case, in this process example, the display position of the corresponding image 370 is set below the enlarged image 360, such that the corresponding image 370 is displayed below the enlarged image 360.

With the corresponding image 370 being displayed where the margin existing around the enlarged image 360 is large, the display size of the corresponding image 370 is increased.

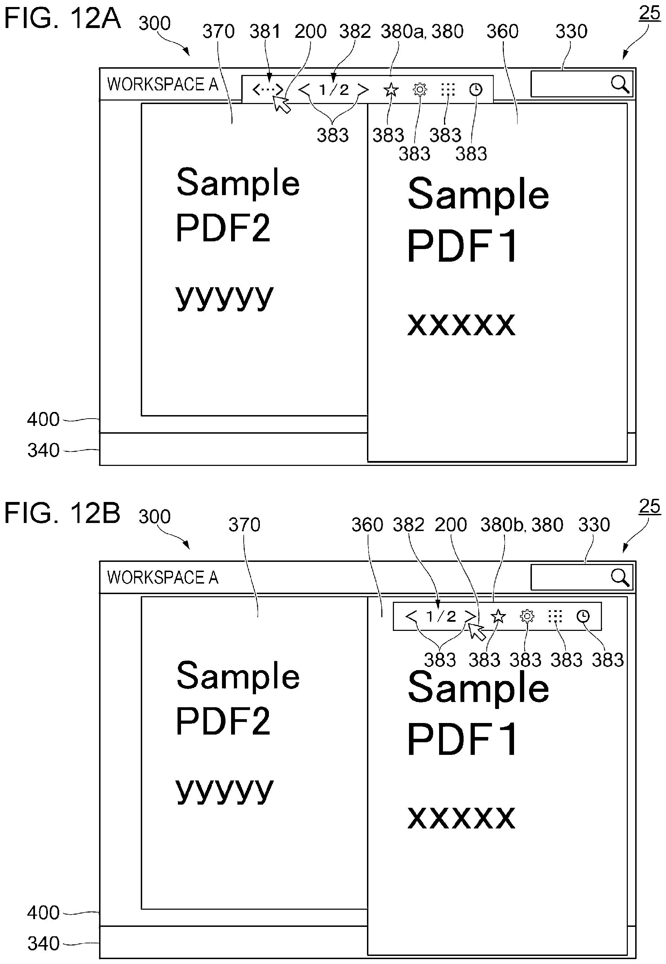

Next, a menu image serving as an image for receiving an operation performed by the user on the enlarged image 360 or the corresponding image 370 will be described with reference to Figs. 12A and 12B. In this example, a menu bar 380 is displayed as the menu image.

Figs. 12A and 12B illustrate an example of the menu bar 380 according to this exemplary embodiment. Specifically, Fig. 12A illustrates a case where the menu bar 380 is shared between the enlarged image 360 and the corresponding image 370, and Fig. 12B illustrates a case where the menu bar 380 is not shared between the enlarged image 360 and the corresponding image 370.

In this exemplary embodiment, as mentioned above, when the user selects the selected icon 310S after preliminarily specifying a file, the enlarged image 360 and the corresponding image 370 are displayed on the operation screen 300.

A menu bar 380a (see Fig. 12A) according to this exemplary embodiment is an image for receiving an operation performed by the user on the enlarged image 360 or the corresponding image 370 or on a file corresponding to the enlarged image 360 or the corresponding image 370.

In this exemplary embodiment, when the cursor 200 is positioned on the enlarged image 360 or the corresponding image 370, the menu bar 380a is displayed, as shown in Fig. 12A. In other words, the menu bar 380a is displayed when the user designates the enlarged image 360 or the corresponding image 370.

In the display example in Fig. 12A, the menu bar 380a is displayed where it does not interfere with the visibility of the enlarged image 360 or the corresponding image 370 for the user.

In other words, the menu bar 380a is displayed where it does not overlap with the enlarged image 360 or the corresponding image 370.

Alternatively, the menu bar 380a may be displayed on the enlarged image 360 and the corresponding image 370 and in an upper region of the enlarged image 360 and the corresponding image 370. As another alternative, the menu bar 380a may be displayed in a lower region of the enlarged image 360 and the corresponding image 370.

In other words, the menu bar 380a may be displayed at an edge of the enlarged image 360 or an edge of the corresponding image 370.

In the menu bar 380, a page display field 382 serving as a display field for the page number of a file and button images 383 related to various types of menu options are displayed.

Examples of the button images 383 include a button image for changing the displayed page and a button image for receiving a command for executing a file editing process.

In this exemplary embodiment, the file editing process may be performed by operating the corresponding one of button images 383. In detail, for example, the editing process involves inputting text or adding a label image or a stamp image.

Another example of the button images 383 includes a button image for displaying the history of editing performed on a file. A yet another example of the button images 383 includes a button image for receiving a command from the user for enlarging the display region of the menu bar 380. By displaying more button images as the display region of the menu bar 380 is enlarged, the user may further perform other types of operations.

Additionally, the menu bar 380 may display a button image 383 for receiving another operation, such as an operation for transmitting a document to another user.

In this exemplary embodiment, as shown in Fig. 12A, a common command image 381 is further displayed in the menu bar 380a.

In this exemplary embodiment, if an operation is performed on one of the button images 383 after the common command image 381 is selected by the user, this operation is reflected on both the enlarged image 360 and the corresponding image 370.

After the common command image 381 is selected by the user, for example, if the user selects the button image 383 for receiving a change of the displayed page, the displayed page is changed in both the enlarged image 360 and the corresponding image 370.

On the other hand, if the user selects the button image 383 for receiving a change of the displayed page in a state where the common command image 381 is not selected, the displayed page is changed in one of the enlarged image 360 and the corresponding image 370.

Fig. 12B illustrates another display example of a menu bar 380b.

The above description relates to the case where the displayed menu bar 380a is shared between the enlarged image 360 and the corresponding image 370.

In Fig. 12B, the menu bar 380b is displayed in association with the selected enlarged image 360 or corresponding image 370 in accordance with the selected enlarged image 360 or corresponding image 370.

In the display example in Fig. 12B, the menu bar 380b is displayed on the enlarged image 360 or the corresponding image 370 where the cursor 200 is positioned.

If the cursor 200 is not positioned on the enlarged image 360 or the corresponding image 370, the menu bar 380b is set to a non-displayed state.

When an operation is performed on one of the button images 383 in a state where the menu bar 380b is displayed on the enlarged image 360 or the corresponding image 370, this operation is reflected on the enlarged image 360 or the corresponding image 370 on which the menu bar 380b is displayed.

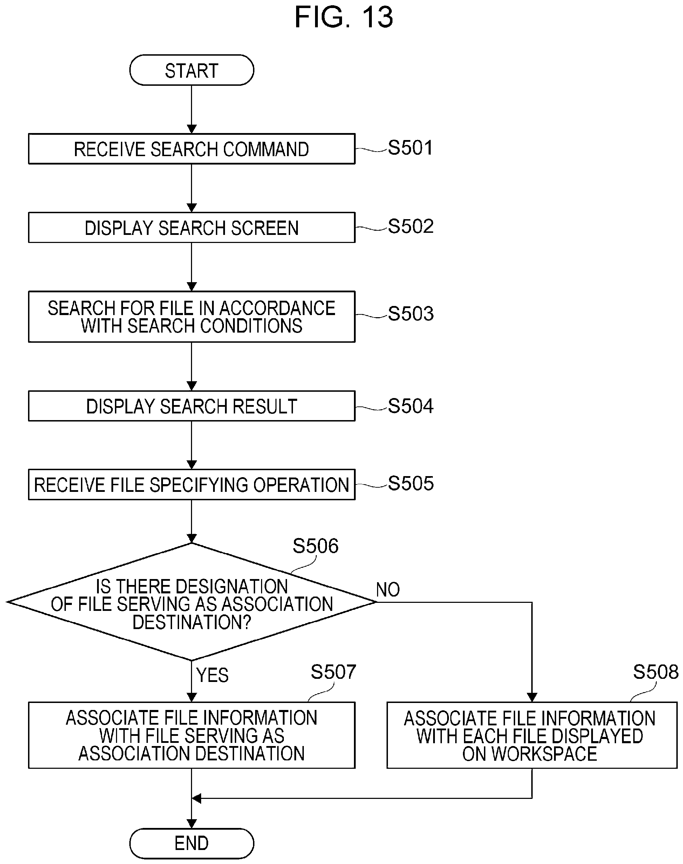

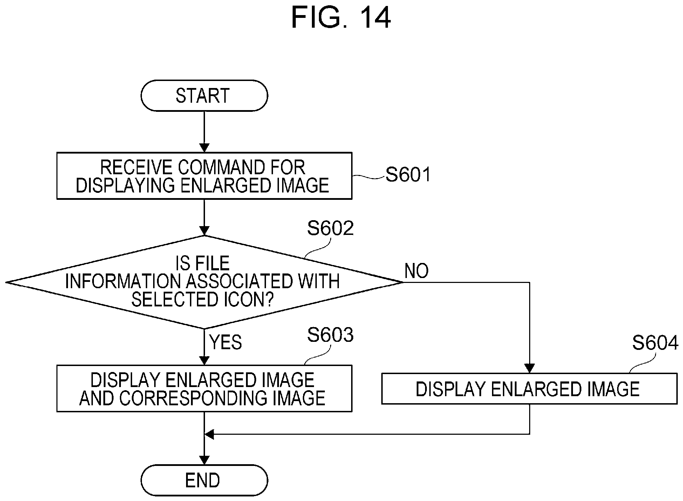

Figs. 13 and 14 are flowcharts illustrating the flow of the process described above.

The following description with reference to Fig. 13 relates to the flow of the process to be executed when file information of a file specified by the user on the search screen according to this exemplary embodiment is to be associated with one of the icons 310.

In this exemplary embodiment, the terminal apparatus 20 first receives a search command from the user in step S501. Then, in step S502, the terminal apparatus 20 displays the search screen 350 on the operation screen 300 (see Fig. 5) displayed on the display 25. In this exemplary embodiment, search conditions for a file to be displayed as the corresponding image 370 on the search screen 350 are received from the user.

In step S503, the server apparatus 10 searches for the file in accordance with the received search conditions.

The server apparatus 10 searches for the file from, for example, files stored in the server apparatus 10 in accordance with the search conditions.

Instead of being targeted to all the files stored in the server apparatus 10, the file searching process may be targeted to a file or files that the user is authorized to browse.

Subsequently, the server apparatus 10 transmits the search result to the terminal apparatus 20.

In step S504, the terminal apparatus 20 displays the search result from the server apparatus 10 on the search screen 350. In detail, the terminal apparatus 20 displays a filename of a file included in the search result on the search screen 350.

In addition to the filename, the terminal apparatus 20 may display, for example, a graphic symbol indicating the file type, an editor of the file, and the file storage location on the search screen 350.

Then, in step S505, the terminal apparatus 20 receives a file specifying operation performed by the user based on a user operation performed via the input unit 24.

In this exemplary embodiment, selection of any of the checkboxes 353a in the specification field 353 on the search screen 350 corresponds to the file specifying operation.

If file information of the file specified by the user is already stored in the apparatus, the terminal apparatus 20 does not have to make a request for the file information to the server apparatus 10.

The request destination or the acquisition destination of the file information is not limited to the server apparatus 10 and may be another apparatus different from the server apparatus 10.

Subsequently, in step S506, the server apparatus 10 determines whether or not there is a designation of a file serving as an association destination to be associated with the file information of the file specified by the user.

In other words, the server apparatus 10 determines whether or not a file serving as an association destination to be associated with the file information of the file specified by the user has been designated by the user.

In this exemplary embodiment, it is determined that there is a designation of a file serving as an association destination if, for example, the aforementioned search is performed after the selected icon 310S has been selected.

In detail, in this exemplary embodiment, if the search is performed in a state where the "search" option included in the context menu 320 displayed with the selection of the selected icon 310S (see Fig. 4) has been selected, it is determined that there is a designation of a file serving as an association destination.

In this case, the file serving as an association destination is the file corresponding to the selected icon 310S selected by the user.

Although not described above, in this exemplary embodiment, there may be a case where a file is designated by the user when a search is performed irrelevant to the "search" option included in the context menu 320 (see Fig. 4). In this case, it is similarly determined that there is a designation of a file serving as an association destination.

In detail, in this exemplary embodiment, there may be a case where a search is performed by inputting a text string to the search window 330 (see Fig. 4) or the tool bar 340 (see Fig. 4). When such a search is to be performed, the user may designate a file.

More specifically, when a search is to be performed by inputting a text string to the search window 330 (see Fig. 4) or the tool bar 340 (see Fig. 4), for example, a screen (not shown) for designating a file is displayed, and the user may designate the file via this screen.

In this exemplary embodiment, it is similarly determined in this case that there is a designation of a file serving as an association destination.

In this case, the file information about the file specified by the user via the search window 330 (see Fig. 4) or the tool bar 340 (see Fig. 4) is associated with the aforementioned file designated by the user.

If it is determined in step S506 that there is a designation of a file serving as an association destination (YES in step S506), the server apparatus 10 associates the file information about the file specified by the user with the designated file (sometimes referred to as "association-destination file" hereinafter) serving as the association destination in step S507, and ends the process.

More specifically, in this exemplary embodiment, the file information about the file specified by the user is transmitted from the terminal apparatus 20 to the server apparatus 10.

The server apparatus 10 associates this file information received from the terminal apparatus 20 with the designated association-destination file.

Furthermore, in this exemplary embodiment, the server apparatus 10 associates the file information about the file specified by the user with the icon 310 corresponding to the association-destination file.

In contrast, if it is determined in step S506 that there is no designation of a file serving as an association destination (NO in step S506), the server apparatus 10 proceeds to step S508 to associate the file information about the file specified by the user with each file displayed on the workspace 400 displayed when a command for a file search is received, and ends the process.

More specifically, when the user is to perform a search via the search window 330 (see Fig. 4) or the tool bar 340 (see Fig. 4), there may be a case where a designation of a file serving as an association destination is not performed.

In this case, in this exemplary embodiment, the file information about the file specified by the user is associated with each file displayed on the workspace 400 displayed when a command for a file search is received, as mentioned above.

In detail, for example, in a case where the user performs a search via the search window 330 (see Fig. 4), if a designation of a file serving as an association-destination file is not to be performed, the file information about the file specified by the user is associated with each file displayed on the workspace 400 displayed during this search.

More specifically, in the example shown in Fig. 4, when the user performs a search via the search window 330, the "workspace A" is displayed, and the file information about the file specified by the user is associated with each file displayed on the "workspace A".

In this case, if there are multiple files on the "workspace A", the aforementioned file information is associated with each of the multiple files.

In the above-described example, the file serving as an association destination and the file information about the file specified by the user are associated with each other in the server apparatus 10. In other words, in the above-described example, the server apparatus 10 acquires the file information about the file specified by the user from files extracted as a result of the searching process, and associates the designated file serving as an association destination with the acquired file information.

Alternatively, the process performed by the server apparatus 10 may be performed by the terminal apparatus 20. For example, each terminal apparatus 20 may associate the file serving as an association destination with the file information about the file specified by the user.

Next, the flow of a process to be executed when the enlarged image 360 and the corresponding image 370 are to be displayed will be described with reference to Fig. 14. This example corresponds to a case where the user uses the input unit 24, such as a mouse device.

In this exemplary embodiment, in step S601, the terminal apparatus 20 first receives a command for displaying the enlarged image 360 based on a user operation performed via the input unit 24.

In detail, the terminal apparatus 20 determines whether or not the user has performed an operation on the enlargement command image 311 displayed in the selected icon 310S (see Fig. 4), and receives the command for displaying the enlarged image 360 if this operation has been performed.

If there is a command for displaying the enlarged image 360, the enlarged image 360 is displayed, as described above.

Subsequently, in step S602, the server apparatus 10 determines whether or not file information is associated with the selected icon 310S selected by the user.

More specifically, the server apparatus 10 determines whether or not the file information about the file specified by the user is associated with the selected icon 310S serving as a display source of the enlarged image 360.

In other words, the server apparatus 10 determines whether or not the file information about the file specified by the user is associated with a file corresponding to the selected icon 310S selected by the user.

If it is determined in step S602 that the file information is associated with the selected icon 310S selected by the user (YES in step S602), the terminal apparatus 20 displays the enlarged image 360 and the corresponding image 370 in step S603.

In detail, in this case, when the terminal apparatus 20 is to display the enlarged image 360, the terminal apparatus 20 also displays the corresponding image 370 corresponding to the file information associated with the selected icon 310S serving as a display source of this enlarged image 360.

In contrast, if it is determined in step S602 that the file information is not associated with the selected icon 310S selected by the user (NO in step S602), the terminal apparatus 20 displays the enlarged image 360 but does not display the corresponding image 370 in step S604.

In other words, in this case, the terminal apparatus 20 displays the enlarged image 360 alone.

In the above description, if a designation of a file serving as an association destination is not performed when a search is to be performed via the search window 330 (see Fig. 4), the file information is associated with each file displayed on the workspace 400 displayed during this search.

Alternatively, in this case, the file information may be associated with the workspace 400 instead of each file displayed on the workspace 400.

In the case where the file information is associated with the workspace 400, the file information is substantially associated with the selected icon 310S. Regardless of the fact that this association is performed, it is determined in step S602 that the file information is not associated with the selected icon 310S, so that the corresponding image 370 is not displayed.

Thus, if it is determined in step S602 that the file information is not associated with the selected icon 310S, the server apparatus 10 may determine whether or not the file information is associated with the workspace 400 on which the selected icon 310S is displayed.

Then, if it is determined that the file information is associated with the workspace 400, the server apparatus 10 also causes the corresponding image 370 corresponding to this file information to be displayed when the enlarged image 360 corresponding to the selected icon 310S is to be displayed.

In this exemplary embodiment, the programs to be executed by the CPU 11a (see Fig. 2) and the CPU 21a (see Fig. 3) serving as examples of processors may be provided to the arithmetic units 11 and 21 by being stored in a computer-readable storage medium, such as a magnetic storage medium (e.g., magnetic tape or a magnetic disk), an optical storage medium (e.g., an optical disk), a magneto-optical storage medium, or a semiconductor memory. Alternatively, the programs to be executed by the CPUs 11a and 21a may be downloaded to the server apparatus 10 and the terminal apparatus 20 by using a communication unit, such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The process performed by the information processing system 1 according to this exemplary embodiment is prepared as a program, such as application software. This program may be provided by a communication unit or may be provided by being stored in a storage medium, such as a compact disc read-only memory (CD-ROM).

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing system comprising:
a processor configured to:
acquire file information serving as information about a file specified by a user;
cause a display to display an enlarged image corresponding to a file image in a case where the file image displayed on the display and serving as an image corresponding to the file is selected by the user, the enlarged image serving as an image with a display size larger than a display size of the file image; and
cause the display to display a corresponding image corresponding to the file information when the enlarged image is displayed on the display.

2. The information processing system according to Claim 1,
wherein the processor is configured to:
cause the display to display a candidate screen that receives an operation performed by the user for specifying the file from a file candidate displayed as the corresponding image; and
acquire the file information serving as the information about the file specified by the user in a case where the operation performed by the user for specifying the file is received on the candidate screen.

3. The information processing system according to Claim 1 or 2, wherein the processor is configured to cause the display to display the corresponding image with a display size larger than the display size of the file image.

4. The information processing system according to any one of Claims 1 to 3, wherein the processor is configured to cause the display to display the enlarged image and the corresponding image without overlapping each other.

5. The information processing system according to Claim 4,
wherein the processor is configured to:
set a display position of the enlarged image based on a display position of the selected file image; and
set a display position of the corresponding image based on the display position of the enlarged image.

6. The information processing system according to Claim 5, wherein the processor is configured to set the display position of the corresponding image based on a size of a margin existing around the enlarged image.

7. The information processing system according to any one of Claims 1 to 4, wherein the processor is configured to, when the enlarged image is to be displayed on the display, vary a display position of the enlarged image between a case where the file information is acquired and a case where the file information is not acquired.

8. The information processing system according to Claim 7,
wherein the processor is configured to:
set the display position of the enlarged image toward an edge of the display in the case where the file information is acquired; and
set the display position of the enlarged image toward a middle of the display in the case where the file information is not acquired.

9. The information processing system according to any one of Claims 1 to 8, wherein the processor is configured to cause the display to display a plurality of the corresponding images when the enlarged image is to be displayed on the display in a case where a plurality of pieces of the file information are acquired, the plurality of corresponding images respectively corresponding to the plurality of pieces of file information.

10. The information processing system according to Claim 9, wherein the processor is configured to cause the display to display all of the plurality of corresponding images.

11. The information processing system according to Claim 9, wherein the processor is configured to switch the corresponding image to be displayed on the display in the case where the plurality of corresponding images exist.

12. The information processing system according to Claim 11, wherein the processor is configured to not include the enlarged image as a switching target of the display and maintain the enlarged image in a displayed state.

13. The information processing system according to any one of Claims 1 to 3, wherein the processor is configured to set the enlarged image to a non-displayed state and cause the display to display a plurality of the corresponding images if the user specifies a plurality of files and acquires a plurality of pieces of the file information and if a predetermined condition is satisfied.

14. The information processing system according to any one of Claims 1 to 13, wherein the processor is configured to acquire, as the file information, information about a file selected by the user from a file extracted as a result of a searching process.

15. A program causing a computer to execute a process, the process comprising:
acquiring file information serving as information about a file specified by a user;
causing a display to display an enlarged image corresponding to a file image in a case where the file image displayed on the display and serving as an image corresponding to the file is selected by the user, the enlarged image serving as an image with a display size larger than a display size of the file image; and
causing the display to display a corresponding image corresponding to the file information when the enlarged image is displayed on the display.
